# EUROPEAN PATENT APPLICATION

(11) **EP 4 801 079 A1**
(43) Date of publication of application: **02.09.2026**
(21) Application number: 23956395.0
(22) Date of filing: 25.10.2023
(51) Int. Cl.: H04W 4/50

(54) **COMMUNICATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Zhe, Dongguan, Guangdong 523860 (CN); CHEN, Wenhong, Dongguan, Guangdong 523860 (CN)
(74) Representative: Grassi, Stefano
(86) International application number: PCT/CN2023/126462
(87) International publication number: WO 2025/086143

(57) **Abstract**

Embodiments of the present application provide a communication method and apparatus, a terminal device, and a network device. The method comprises: a terminal device receiving first information, wherein the first information indicates a plurality of TCI states, and network nodes respectively associated with the plurality of TCI states jointly provide a communication service for the terminal device.

## Description

### TECHNICAL FIELD

Embodiments of the present disclosure relate to the field of mobile communication technologies, and in particular, to a communication method and apparatus, a terminal device, and a network device.

### BACKGROUND ART

For future wireless communication networks, a terminal device can be jointly served by multiple selected network nodes. However, there is currently no clear method for how the terminal device determines the spatial relationship information or Quasi Co-Location (QCL) information of the multiple network nodes that provide service to it.

### SUMMARY

Embodiments of the present disclosure provide a communication method and apparatus, a terminal device, and a network device.

According to a first aspect, a communication method provided by an embodiment of the present disclosure includes:

A terminal device receives first information, the first information indicating multiple Transmission Configuration Indication (TCI) states, wherein network nodes associated with each TCI state among the multiple TCI states jointly provide communication services for the terminal device.

According to a second aspect, a communication method provided by an embodiment of the present disclosure includes:

A network device sends first information to a terminal device, the first information indicating multiple TCI states, wherein network nodes associated with each TCI state among the multiple TCI states jointly provide communication services for the terminal device.

According to a third aspect, a communication apparatus provided by an embodiment of the present disclosure is applied to a terminal device. The apparatus includes:

A receiving unit, configured to receive first information, the first information indicating multiple TCI states, wherein network nodes associated with each TCI state among the multiple TCI states jointly provide communication services for the terminal device.

According to a fourth aspect, a communication apparatus provided by an embodiment of the present disclosure is applied to a network device. The apparatus includes:

A sending unit, configured to send first information to a terminal device, the first information indicating multiple TCI states, wherein network nodes associated with each TCI state among the multiple TCI states jointly provide communication services for the terminal device.

According to a fifth aspect, a terminal device provided by an embodiment of the present disclosure includes a processor and a memory. The memory is configured to store a computer program, and the processor is configured to invoke and run the computer program stored in the memory to execute the aforementioned communication method.

According to a sixth aspect, a network device provided by an embodiment of the present disclosure includes a processor and a memory. The memory is configured to store a computer program, and the processor is configured to invoke and run the computer program stored in the memory to execute the aforementioned communication method.

A chip provided by an embodiment of the present disclosure is configured to implement the aforementioned communication method.

Specifically, the chip includes: a processor, configured to invoke and run a computer program from a memory, causing a device equipped with the chip to execute the aforementioned communication method.

A computer-readable storage medium provided by an embodiment of the present disclosure is configured to store a computer program, the computer program causing a computer to execute the aforementioned communication method.

A computer program product provided by an embodiment of the present disclosure includes computer program instructions, the computer program instructions causing a computer to execute the aforementioned communication method.

A computer program provided by an embodiment of the present disclosure, when run on a computer, causes the computer to execute the aforementioned communication method.

Embodiments of the present disclosure provide a communication method, wherein a network device can indicate multiple TCI states to a terminal device. In this way, the terminal device can obtain spatial information or QCL information of network nodes associated with each TCI state indicated by the first information based on the TCI state. The spatial relationship or QCL information of multiple network nodes is clarified, ensuring normal communication.

### BRIEF DESCRIPTION OF DRAWINGS

The accompanying drawings described herein are provided to further understand the present disclosure, constitute a part of the present disclosure, and are used to explain the present disclosure together with the illustrative embodiments and descriptions thereof, and do not constitute an undue limitation of the present disclosure. In the drawings:
FIG. 1 shows a schematic diagram of a cell-free network architecture;
FIG. 2 shows a schematic structural diagram of a MAC CE for activating/deactivating TCI states;
FIG. 3 shows a schematic flowchart of a communication method;
FIG. 4 shows a schematic signaling structure of second information;
FIG. 5 shows a schematic diagram of a TCI state selection mechanism based on bitmap;
FIG. 6 shows a schematic diagram of a two-stage TCI state selection mechanism;
FIG. 7 is a first schematic structural diagram of a communication apparatus provided by an embodiment of the present disclosure;
FIG. 8 is a second schematic structural diagram of a communication apparatus provided by an embodiment of the present disclosure;
FIG. 9 is a schematic structural diagram of a communication device provided by an embodiment of the present disclosure;
FIG. 10 is a schematic structural diagram of a chip according to an embodiment of the present disclosure;
FIG. 11 is a schematic block diagram of a communication system provided by an embodiment of the present disclosure.

### DETAILED DESCRIPTION OF EMBODIMENTS

The technical solutions in the embodiments of the present disclosure will be described below with reference to the accompanying drawings in the embodiments of the present disclosure. Apparently, the described embodiments are part of the embodiments of the present disclosure, but not all of them. Based on the embodiments in the present disclosure, all other embodiments obtained by persons of ordinary skill in the art without creative efforts shall fall within the protection scope of the present disclosure.

It should be noted that the terms "system" and "network" herein are often used interchangeably. The term "and/or" herein is only a description of an associative relationship between associated objects, indicating that three relationships may exist. For example, A and/or B may indicate: A exists alone, both A and B exist, or B exists alone. In addition, the character "/" herein generally indicates that the associated objects are in an "or" relationship. It should also be understood that "indication" mentioned in the embodiments of the present disclosure may be direct indication, indirect indication, or may indicate an associative relationship. For example, A indicates B may indicate that A directly indicates B, for example, B can be obtained through A; it may also indicate that A indirectly indicates B, for example, A indicates C, and B can be obtained through C; it may also indicate that there is an associative relationship between A and B. It should also be understood that "corresponds to" mentioned in the embodiments of the present disclosure may indicate a direct or indirect correspondence relationship between the two, may also indicate an associative relationship between the two, or may be an indication-indicated, configuration-configured relationship, etc. It should also be understood that "predefined" or "predefined rule" mentioned in the embodiments of the present disclosure may be implemented by pre-storing corresponding codes, tables, or other means that can be used to indicate related information in a device (for example, including a terminal device and a network device). The specific implementation manner thereof is not limited in the present disclosure. For example, "predefined" may refer to being defined in a protocol. It should also be understood that in the embodiments of the present disclosure, the "protocol" may refer to a standard protocol in the field of communications, for example, may include LTE protocol, NR protocol, and related protocols applied to future communication systems, which is not limited in the present disclosure.

To facilitate understanding of the technical solutions of the embodiments of the present disclosure, related technologies of the embodiments of the present disclosure are described below. The following related technologies can be arbitrarily combined with the technical solutions of the embodiments of the present disclosure as optional solutions, all of which belong to the protection scope of the embodiments of the present disclosure.

### 1. Cell-Free Network

The 3rd Generation Partnership Project (3GPP) may adopt the design principle of Cell-Free, which weakens or completely eliminates the concept of "cell", shifting from a network-centric design to a terminal-centric design. Specifically, in traditional cellular networks centered on the network (NW), terminal devices access different NW cells in a single Transmission Reception Point (TRP) manner, and then provide uplink and downlink transmission services to the terminal devices in a single TRP or multiple TRP manner. However, in terminal-centric cell-free networks, cellular network boundaries are broken or a cell-free boundary design is adopted. Terminal devices can be jointly served by multiple network nodes. The specific uplink and downlink transmission methods may be based on Coherent Joint Transmission (CJT) or Non-Coherent Joint Transmission (NCJT).

It should be noted that network nodes include but are not limited to Access Points (APs) or Transmission Reception Points (TRPs).

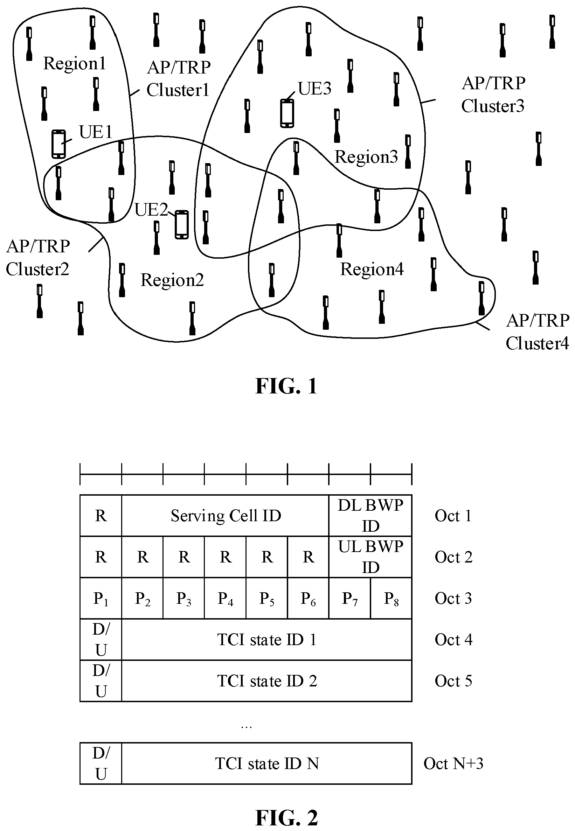

FIG. 1 shows a schematic diagram of a cell-free network architecture. Terminal devices can be served by sets composed of multiple network nodes. Among them, terminal device UE1 can be provided with communication services by AP/TRP cluster 1 in area 1 (i.e., multiple APs in AP cluster 1 simultaneously provide downlink transmission and uplink reception for UE1); terminal device UE2 can be provided with communication services by AP/TRP cluster 2 in area 2; terminal device UE3 can be provided with communication services by AP/TRP cluster 3 in area 3; terminal device UE4 can be provided with communication services by AP/TRP cluster 4 in area 4.

It is understandable that for one AP/TRP, it can serve multiple terminal devices simultaneously. For example, referring to FIG. 1, area 1 and area 2 may overlap, and the three APs/TRPs located at the overlapping position of area 1 and area 2 can simultaneously serve UE1 and UE2. To provide this spatial multiplexing capability, each AP/TRP can be configured with multiple antenna ports and may have independent beamforming capability.

The advantage of a Cell-Free network is that it can provide better coverage for terminal devices and significantly increase the data rate at the cell edge of the cellular system. Since terminal devices can communicate with multiple APs/TRPs, the path loss experienced by signals is smaller on average. Furthermore, multiple APs/TRPs, through joint processing, have stronger interference suppression capability, providing higher and more stable Signal to Interference plus Noise Ratio (SINR).

### 2. Transmission Configuration Indication state (TCI state)

In the progress of 3GPP standardization, the concept of TCI state was proposed in Release 15 (Rel.15), used for indicating downlink spatial information (e.g., QCL-Type D) and conveying Quasi Co-Location (QCL) information (e.g., QCL-Type A, QCL-Type B, and QCL-Type C) in the time domain and/or frequency domain. However, this TCI state indication mechanism is only applicable to downlink channels and signals, and has many limitations when applied in NR systems. In addition, the design is too flexible and incurs significant signaling overhead. To provide a unified uplink and downlink beam management mechanism for NR systems, Rel.17 introduced the concept of unified TCI state.

Unified TCI state designs three modes, including joint TCI state, applicable to uplink and downlink channels and signals; downlink TCI state (DL TCI state), only applicable to downlink channels and signals; and uplink TCI state (UL TCI state), only applicable to uplink channels and signals. DL TCI state and UL TCI state can be called separate TCI states (Separate DL/UL TCI state).

It should be noted that downlink channels (e.g., part of PDCCH, PDSCH) and signals (e.g., aperiodic CSI-RS) use the same downlink transmit beam, indicated by DL TCI state or joint TCI state. Uplink channels (PUCCH, PUSCH) and signals (SRS) use the same uplink transmit beam, indicated by UL TCI state or joint TCI state.

It should be understood that "unified" in unified TCI state has multiple layers of meaning. The first layer of "unified" meaning refers to unified TCI state unifying the uplink and downlink beam indication mechanisms, because in Rel.15/Rel.16 NR standards, TCI state is only used for downlink beam indication, and uplink beam indication uses signaling based on Spatial relation information. The second layer of "unified" meaning refers to the unification of beams between different channels. For example, under the configuration of Separate DL/UL TCI state, the terminal device can consider that downlink PDCCH (UE-specific) and PDSCH (UE-specific) are unified into the same beam for transmission; additionally, the terminal device's uplink PUCCH and PUSCH use the same beam for transmission. Under the configuration of Joint TCI state, the terminal device can consider that different uplink and downlink channels and signals can have good beam symmetry assurance, i.e., symmetric beam pairs are used for uplink and downlink communication.

Unified TCI state can be indicated using Radio Resource Control (RRC) signaling and/or, Medium Access Control Control Element (MAC CE), and/or Downlink Control Information (DCI) format 1_1/1_2.

For example, multiple TCI states can be configured in RRC parameters. Among them, one TCI state may include: TCI state identifier (ID), QCL information 1, QCL information 2. Additionally, one QCL information may include: QCL type configuration and QCL reference signal configuration. The QCL reference signal configuration may include a cell ID, a Bandwidth Part (BWP) ID, and a reference signal identifier (e.g., CSI-RS resource ID or SSB index).

Definitions of different QCL types are as follows: QCL TypeA is used to configure {Doppler shift, Doppler spread, average delay, delay spread}; QCL typeB is used to configure {Doppler shift, Doppler spread}; QCL typeC is used to configure {Doppler shift, average delay}; QCL typeD is used to configure {Spatial Rx parameter}.

For joint TCI state/DL TCI state, the QCL type configuration may include one of QCL-typeA, QCL-typeB, QCL-typeC, or QCL-typeD, where QCL-TypeD indicates that two reference signals can use the same spatial reception parameters, i.e., the same spatial reception filter, i.e., the same reception "beam". For UL TCI state, the QCL type configuration includes QCL-typeD, without the above QCL-TypeA, QCL-typeB, and QCL-typeC QCL.

Additionally, RRC signaling includes the following parameter:
unifiedTCI-StateType-r17 ENUMERATED {separate, joint}

It should be noted that the above parameter is used to indicate whether the TCI state is joint TCI state or separate TCI state.

In some embodiments, the NW can activate/deactivate some TCI states among the multiple TCI states configured by RRC signaling through a MAC CE.

For example, FIG. 2 shows a schematic structural diagram of a MAC CE for activating/deactivating TCI states. Referring to FIG. 2, the MAC CE signaling may include the following fields: serving cell ID, downlink bandwidth part (DL BWP) ID, UL BWP ID, Pᵢ, D/U, TCI state ID, and reserved bit R.

The serving cell ID field is used to indicate the ID of the serving cell to which the MAC CE applies, and its length can be 5 bits. DL BWP ID is used to indicate the DL BWP to which the MAC CE can be applied, and its length can be 2 bits. UL BWP ID indicates the UL BWP to which the MAC CE can be applied, and its length can be 2 bits.

Pᵢ is used to indicate whether each TCI codepoint in the DCI has multiple TCI states or a single TCI state. Here, i is an integer greater than or equal to 1 and less than or equal to M (e.g., M=8). M is the number of TCI codepoints in the DCI. For example, if Pᵢ is set to 0, it indicates that the i-th TCI codepoint includes DL TCI state and UL TCI state. If Pᵢ is set to 1, it indicates that the i-th TCI codepoint includes only DL/joint TCI state, or UL TCI state.

D/U is used to indicate whether the TCI state ID in the current octet is for joint/downlink or uplink. If this field is set to 1, the TCI state ID in the same octet is used for joint/downlink. If this field is set to 0, the TCI state ID in the same octet is used for uplink.

In some embodiments, the NW can use the TCI state field in DCI format 1_1/1_2 to indicate the TCI state(s) that the terminal device should use from the TCI states activated by the MAC CE. For example, the codepoint "000" of this TCI state field may indicate the first activated TCI state ID 1 by the MAC CE, and the codepoint "111" of this TCI state field may indicate the last activated TCI state ID 8 by the MAC CE.

For future wireless communication networks, the cell-free network architecture offers new possibilities. For indicating spatial information or QCL relationships under this technology, it is still a technical gap within the standardization scope of 3GPP. That is to say, there is currently no clear method for how a terminal device determines the spatial relationship information or QCL information of the multiple network nodes that provide service to it.

Additionally, in Rel-18 enhanced transmission techniques, a transmission method based on CJT has been introduced. Among them, the CJT-based transmission method refers to joint precoding transmission for one or more layers of data streams by multiple TRPs separated in space. Rel-18 supports up to 4 TRPs performing CJT transmission to a terminal device. For indicating spatial information or QCL relationships of multiple TRPs, there is also no clear method currently.

Based on this, embodiments of the present disclosure provide a communication method, wherein a network device can indicate multiple TCI states to a terminal device. In this way, the terminal device can obtain spatial information or QCL information of network nodes associated with each TCI state indicated by the first information according to the TCI state. The spatial relationship or QCL information of multiple network nodes is clarified, ensuring normal communication.

To facilitate understanding of the technical solutions of the embodiments of the present disclosure, the technical solutions of the present disclosure are described in detail through specific embodiments below. The above related technologies can be arbitrarily combined with the technical solutions of the embodiments of the present disclosure, all of which belong to the protection scope of the embodiments of the present disclosure. The embodiments of the present disclosure include at least part of the following content.

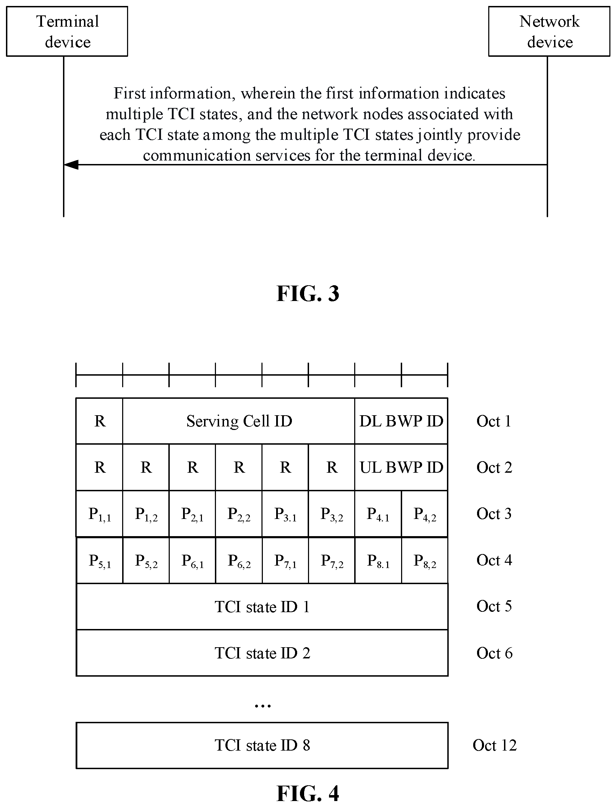

FIG. 3 is a schematic flowchart of a communication method provided by an embodiment of the present disclosure. As shown in FIG. 3, the method includes the following content.

S110: A network device sends first information; correspondingly, a terminal device receives the first information.

Herein, the first information indicates multiple TCI states, and network nodes associated with each TCI state among the multiple TCI states jointly provide communication services for the terminal device.

It should be noted that the communication method provided by the embodiments of the present disclosure can be applied to the Cell-Free communication network shown in FIG. 1. The communication method provided by the embodiments of the present disclosure can also be applied to traditional cellular networks. For example, the communication method provided by the embodiments of the present disclosure can be applied to CJT-based transmission in cellular networks.

In some embodiments, the terminal device can be jointly served by multiple network nodes, or multiple network nodes can jointly provide uplink and downlink communication services for the terminal. Among them, network nodes include but are not limited to APs and TRPs.

It should be noted that the network device mentioned in the embodiments of the present disclosure can be any one of the multiple network nodes that provide communication services for the terminal device.

In some embodiments, the network device can send the first information to the terminal device, or the network device can send the first information to another terminal device, so that the other terminal device forwards the first information to the terminal device. Correspondingly, the terminal device can receive the first information sent by the network device, or the terminal device can receive the first information from the network device forwarded by another terminal device. This is not limited in the embodiments of the present disclosure.

It should be understood that to perform uplink and downlink transmission, the network device can indicate multiple TCI states for the terminal device through the first information, enabling the terminal device to obtain spatial information or QCL information of multiple network nodes through this indication.

It should be noted that multiple TCI states may refer to two or more TCI states. Additionally, multiple network nodes refer to two or more network nodes, which is not limited in the embodiments of the present disclosure.

In some embodiments, the multiple TCI states indicated by the first information may be associated with multiple network nodes. For example, each TCI state among the multiple TCI states may be associated with one network node, wherein the network nodes associated with the TCI states may be the same or different. Alternatively, each network node among the multiple network nodes may be associated with one or more TCI states.

It should be understood that the network device indicating multiple TCI states to the terminal device can indicate that the network nodes respectively associated with the multiple TCI states can jointly provide communication services for the terminal device. These network nodes can become nodes in a terminal-centric network node cluster or set. In this way, the terminal device can obtain spatial information or QCL information of network nodes associated with each TCI state indicated by the first information according to the TCI state.

It should be noted that the association relationship between a TCI state and a network node may be predefined or configured by the network device, which is not limited in the embodiments of the present disclosure.

It should also be noted that the multiple network nodes that jointly provide communication services for the terminal device may be selected by the terminal device. For example, the terminal device can measure downlink reference signals of multiple APs/TRPs and select the top N APs/TRPs with the highest measurement parameters such as Reference Signal Receiving Power (RSRP) or SINR to serve it.

In summary, in the communication method provided by the embodiments of the present disclosure, a network device can indicate multiple TCI states to a terminal device. In this way, the terminal device can obtain spatial information or QCL information of network nodes associated with each TCI state indicated by the first information according to the TCI state. The spatial relationship or QCL information of multiple network nodes is clarified, ensuring normal communication.

In an embodiment of the present disclosure, the multiple TCI states indicated by the first information may include joint TCI state and/or separate TCI state.

It should be noted that in current related technologies, within one serving cell, the NW can only configure one type of TCI state, i.e., within one serving cell, the TCI states are only joint TCI states, or only separate TCI states. For example, the NW can configure the type of TCI state within a serving cell through the following parameter in RRC signaling: unifiedTCI-StateType-r17 ENUMERATED {separate, joint}.

In the embodiments of the present disclosure, a network device can indicate mixed TCI states for the same terminal device. That is to say, the multiple TCI states indicated by the network device may include both joint TCI states and separate TCI states.

It should be noted that each joint TCI state corresponds to one network node; each pair of separate TCI states (including DL TCI states and UL TCI states) corresponds to one network node.

It should be understood that configuring different types of TCI states to the same terminal device by the network device allows for more flexible deployment on the network side. For scenarios with beam symmetry, the same QCL indication can be used for uplink and downlink; for scenarios where uplink and downlink network nodes are decoupled (i.e., the uplink and downlink network nodes serving the terminal device are different), different TCI states can be used to indicate different uplink and downlink QCL information (corresponding to different network nodes). Additionally, from the perspective of the terminal device side, the terminal device can only measure the configured uplink or downlink, saving unnecessary measurement overhead for the terminal device.

It should be noted that the network device indicating multiple TCI states through the first information may be based on protocol stack layered indications, such as completing the indication through signaling from the RRC layer to the MAC layer and then to the physical layer.

In an embodiment of the present disclosure, the terminal device may determine the multiple TCI states indicated by the first information based on combining the first information and second information. Specifically, on the basis of S110, the communication method provided by the embodiment of the present disclosure may further include the following steps:

The network device sends second information; correspondingly, the terminal device receives the second information; wherein the second information is used to activate N TCI states, the multiple TCI states are at least part of the N activated TCI states, and N is an integer greater than or equal to 2.

It is understandable that the network device can activate N TCI states through the second information, and then dynamically indicate part of the N TCI states to the terminal device through the first information.

It should be noted that N can also be understood as the number of network nodes providing communication services for the terminal device, and different network nodes may correspond to different TCI states. Among them, N can be dynamically selected through a network node selection algorithm. For example, the terminal device can measure downlink reference signals of multiple network nodes and select the top N network nodes with the highest measurement parameters such as RSRP and SINR to serve it.

In one implementation, the second information may be carried by MAC CE signaling, and the first information may be carried by DCI. It is understandable that, similar to the traditional NR system, the network device can activate N TCI states through MAC CE signaling, and then dynamically indicate part of the activated N TCI states through DCI signaling.

It should be noted that in this implementation, the network device can configure at least one TCI state resource pool in advance for the terminal device through RRC signaling. The TCI state resource pool may include multiple TCI states. The TCI state resource pool mixes joint TCI states and/or separate TCI states. That is to say, the TCI states configured by RRC can be joint TCI states or separate TCI states.

In some embodiments, the second information may be carried by RRC signaling, and the first information may be carried by DCI signaling. That is to say, the network device can directly indicate N TCI states using RRC signaling, and combine it with DCI signaling to dynamically indicate part of the N TCI states. It is understandable that configuring a small number of TCI states directly through RRC signaling and dynamically indicating the TCI state used by the terminal device through DCI signaling can save signaling overhead.

It should be noted that the N TCI states activated by the second information may include joint TCI states and/or separate TCI states. That is to say, the N TCI states activated by the second information can be either joint TCI states or separate TCI states.

In an embodiment of the present disclosure, the second information activating N TCI states can be understood as activating multiple codepoints. The second information can indicate multiple TCI states corresponding to each codepoint, and the multiple TCI states corresponding to each codepoint are at least part of the N activated TCI states. That is to say, each codepoint may correspond to the full set or a subset of the N TCI states.

It should be noted that the codepoint mentioned in the embodiments of the present disclosure may be a TCI codepoint. "Codepoint" is equivalent to or can be replaced with "TCI codepoint".

For example, using a 3-bit codepoint for explanation. Referring to the correspondence between TCI codepoints and multiple TCI states shown in Table 1. Among them, codepoint "000" may correspond to the first TCI state to the N-th TCI state. Codepoint "001" may correspond to the first TCI state, ..., the N-th TCI state, and does not include the second TCI state. Codepoint "010" may correspond to the second TCI state, ..., the N-th TCI state, excluding the first TCI state. Codepoint "111" may correspond only to the first TCI state and the N-th TCI state, and does not include the second TCI state to the (N-1)-th TCI state.

**Table 1**

| Codepoint | 1st TCI state | 2nd TCI state | ... | N-th TCI state |
|---|---|---|---|---|
| 000 | TCI state ID = 1 | TCI state ID = 21 | ... | TCI state ID = 44 |
| 001 | TCI state ID = 5 | / | ... | / |
| 010 | / | TCI state ID = 24 | | TCI state ID = 41 |
| ... | ... | ... | ... | ... |
| 111 | TCI state ID = 9 | / | | TCI state ID = 46 |

Based on this, the first information can indicate multiple TCI states based on codepoints by carrying different codepoints. Specifically, the first information may carry a target codepoint, the target codepoint being any one of the multiple codepoints; the multiple TCI states indicated by the first information are the multiple TCI states corresponding to the target codepoint.

It is understandable that the first information can carry one target codepoint each time. The terminal device can determine the TCI state corresponding to the target codepoint carried in the first information based on the correspondence between codepoints and multiple TCI states indicated in the second information, thereby obtaining spatial information or QCL information of multiple network nodes.

The following details how the second information indicates the multiple TCI states corresponding to each TCI codepoint.

In some embodiments, the second information may include a first field. It should be noted that a field may also be called a domain, an indication field, etc., and is uniformly referred to as a field in the embodiments of the present disclosure.

In the embodiments of the present disclosure, the number of first fields may be M*N, where N may be the number of activated TCI states, or the number of network nodes providing communication services for the terminal device. M is the number of codepoints.

Among them, a first field P_{m, n} can indicate whether the m-th codepoint corresponds to the n-th TCI state; m is an integer greater than or equal to 1 and less than or equal to M, i.e., 1≤m≤M, and n is an integer greater than or equal to 1 and less than or equal to N, i.e., 1≤n≤N.

For example, if the value of the first field P_{m, n} is a first value (e.g., 1), it indicates that the m-th codepoint corresponds to the n-th TCI state, that is, the n-th TCI state exists in the m-th codepoint. If the value of the first field P_{m, n} is a second value (e.g., 0), it indicates that the m-th codepoint does not correspond to the n-th TCI state, that is, the n-th TCI state does not exist in the m-th codepoint.

In some embodiments, the second information may further include a third field, which can indicate the identifier information (ID) of the multiple TCI states corresponding to each TCI codepoint. The number of third fields may be M, and each third field may indicate the IDs of the TCI states included in the m-th codepoint.

For example, using a 3-bit codepoint, i.e., the number of codepoints M=8, and N=2 for explanation. Referring to the schematic signaling structure of second information shown in FIG. 4. The second information may include the following fields: serving cell ID, DL BWP ID, UL BWP ID, P_{m,n} (i.e., the first field), TCI state ID (i.e., the third field), and reserved bit R.

Among them, the serving cell ID field is used to indicate the ID of the serving cell to which the MAC CE applies, and its length can be 5 bits. DL BWP ID is used to indicate the DL BWP to which the MAC CE can be applied, and its length can be 2 bits. UL BWP ID indicates the UL BWP to which the MAC CE can be applied, and its length can be 2 bits.

P_{m, n} can indicate whether the m-th codepoint corresponds to the n-th TCI state. If P_{m, n} is set to 1, it indicates that the m-th TCI codepoint includes the n-th TCI state. If P_{m, n} is set to 0, it indicates that the m-th TCI codepoint does not include the n-th TCI state. For example, referring to FIG. 4, if P_{1, 1} is set to 1, it indicates that the first TCI codepoint "000" includes the first TCI state; if P_{1, 1} is set to 0, it indicates that the first TCI codepoint "000" does not include the first TCI state. If P_{1, 2} is set to 1, it indicates that the first TCI codepoint "000" includes the second TCI state; if P_{1, 2} is set to 0, it indicates that the first TCI codepoint "000" does not include the second TCI state. By analogy, if P_{8, 1} is set to 1, it indicates that the 8th TCI codepoint "111" includes the first TCI state; if P_{8, 1} is set to 0, it indicates that the 8th TCI codepoint "111" does not include the first TCI state. If P_{8, 2} is set to 1, it indicates that the 8th TCI codepoint "111" includes the second TCI state; if P_{8, 2} is set to 0, it indicates that the 8th TCI codepoint "111" does not include the second TCI state.

TCI state ID m can indicate the ID of each TCI state included in the multiple TCI states of the m-th codepoint. Specifically, TCI state ID 1 can indicate the IDs of the multiple TCI states included in the first codepoint "000"; TCI state ID 2 can indicate the IDs of the multiple TCI states included in the second codepoint "001"; by analogy, TCI state ID 8 can indicate the IDs of the multiple TCI states included in the 8th codepoint "111".

It should be noted that the above signaling structure of the second information is only an illustration, and the positions of different fields can be adjusted.

In some embodiments, the TCI states configured or activated by the network device may include joint TCI states and/or separate TCI states.

Herein, in a case where the n-th TCI state is a joint TCI state, the first field P_{m, n} is used to indicate whether the m-th codepoint corresponds to the n-th joint TCI state;

In a case where the n-th TCI state is a separate TCI state, the first field P_{m, n} may include a downlink subfield P_{m,D,n} and an uplink subfield P_{m,U,n}; wherein, the downlink subfield P_{m,D,n} is used to indicate whether the m-th codepoint corresponds to the n-th downlink TCI state; the uplink subfield P_{m,U,n} is used to indicate whether the m-th codepoint corresponds to the n-th uplink TCI state.

In an example, when the TCI states configured or activated by the network device are joint TCI states, the correspondence between TCI codepoints and joint TCI states can be referred to Table 2.

**Table 2**

| Codpoint | 1st joint TCI state | 2nd joint TCI state | ... | N-th joint TCI state |
|---|---|---|---|---|
| 000 | Joint TCI state ID = 1 | Joint TCI state ID = 21 | ... | Joint TCI state ID = 44 |
| 001 | Joint TCI state ID = 5 | / | ... | / |
| 010 | / | Joint TCI state ID = 24 | | Joint TCI state ID = 41 |
| ... | ... | ... | ... | ... |
| 111 | Joint TCI state ID = 9 | / | | Joint TCI state ID = 46 |

Among them, the network device can use the first field P_{m, n} to indicate whether the m-th codepoint corresponds to the n-th joint TCI state.

In another example, when the network device configures or activates separate TCI states, the correspondence between TCI codepoints and separate TCI states in Table 3 can be referred to. Specifically, one TCI codepoint can indicate up to N pairs of uplink and downlink TCI states.

**Table 3**

| Codepoint | 1st DL TCI state | 1st UL TCI state | ... | N-th DL TCI state | N-th UL TCI state |
|---|---|---|---|---|---|
| 000 | DL TCI state ID = 1 | UL TCI state ID = 2 | ... | DL TCI state ID = 3 | UL TCI state ID = 4 |
| 001 | DL TCI state ID = 5 | UL TCI state ID = 6 | ... | / | / |
| 010 | / | / | ... | DL TCI state ID = 7 | UL TCI state ID = 8 |
| 011 | DL TCI state ID = 9 | / | ... | DL TCI state ID = 10 | / |
| ... | ... | ... | ... | ... | ... |
| 111 | DL TCI state ID = 13 | UL TCI state ID = 14 | ... | DL TCI state ID = 15 | / |

It is understandable that for separate TCI states, it is necessary to indicate the corresponding uplink and/or downlink TCI states separately. Therefore, in the embodiments of the present disclosure, P_{m,D,n} and P_{m,U,n} can be used in the second information to indicate whether the n-th DL TCI state or UL TCI state exists in the m-th codepoint. For example, if P_{m,D,n} is set to a first value (e.g., 1), it indicates that the n-th DL TCI state exists in the m-th codepoint; if P_{m,D,n} is set to a second value (e.g., 0), it indicates that the n-th DL TCI state does not exist in the m-th codepoint. Additionally, the ID of the DL TCI state and/or UL TCI state in each separate TCI state can be indicated in the second information.

In yet another example, when the network device simultaneously configures or activates separate TCI states and joint TCI states, the correspondence between TCI codepoints and TCI states in Table 4 can be referred to. Among them, the first TCI state is a separate TCI state, and the N-th TCI state is a joint TCI state.

**Table 4**

| Codpoint | 1st DL TCI State | 1st UL TCI State | ... | N-th joint TCI |
|---|---|---|---|---|
| | | | | State |
| 000 | DL TCI state ID = 1 | UL TCI state ID = 2 | ... | DL TCI state ID = 3 |
| 001 | DL TCI state ID = 5 | UL TCI state ID = 6 | ... | / |
| 010 | / | | ... | DL TCI state ID = 7 |
| 011 | DL TCI state ID = 9 | | ... | DL TCI state ID = 10 |
| ... | ... | ... | ... | ... |
| 111 | DL TCI state ID = 13 | UL TCI state ID = 14 | ... | DL TCI state ID = 15 |

It is understandable that for separate TCI states, it is necessary to indicate the uplink and/or downlink TCI states separately. In the embodiments of the present disclosure, P_{m,D,n} and P_{m,U,n} can be used to indicate whether the n-th DL TCI state or UL TCI state exists in the m-th codepoint. For joint TCI states, P_{m, n} can be used to indicate whether the m-th codepoint corresponds to the n-th joint TCI state.

It should be noted that to ensure consistent understanding of the signaling structure of the second information between the network device and the terminal device, the second information may further include a second field, which is used to indicate whether each TCI state among the N activated TCI states is a separate TCI state or a joint TCI state.

In one example, the number of second fields may be N, and the n-th second field can indicate whether the n-th TCI state is a separate TCI state or a joint TCI state. For example, if the n-th second field is set to a first value (e.g., 0), it indicates that the n-th TCI state is a separate TCI state; if the n-th second field is set to a second value (e.g., 1), it indicates that the n-th TCI state is a joint TCI state.

In another example, the second field may have a bit length of N, wherein the n-th bit can indicate whether the n-th TCI state among the N activated TCI states is a separate TCI state or a joint TCI state. For example, if the n-th bit is set to a first value (e.g., 0), it indicates that the n-th TCI state is a separate TCI state; if the n-th bit is set to a second value (e.g., 1), it indicates that the n-th TCI state is a joint TCI state.

It should be noted that in this embodiment, the second information may be carried by MAC CE signaling (i.e., indicated by activating codepoints), and the first information may be carried by DCI signaling.

It can be seen that in the communication method provided by the embodiments of the present disclosure, the network device can indicate multiple TCI states to the terminal device based on codepoints on the basis of the current MAC CE signaling structure, which has good compatibility. However, as the number of network nodes increases, codepoints cannot support TCI states for a large number of network nodes.

In an embodiment of the present disclosure, the second information can directly indicate the identifier information of N TCI states to achieve activation of the N TCI states. In this way, the first information can indicate multiple TCI states based on a Bitmap.

In some embodiments, the second information may include N fourth fields, and the N fourth fields correspond respectively to the N activated TCI states. That is to say, each fourth field corresponds to one TCI state.

Herein, in a case where the n-th activated TCI state is a joint TCI state, the fourth field corresponding to the n-th activated TCI state is used to indicate the identifier information of the n-th activated TCI state;

In a case where the n-th activated TCI state is a separate TCI state, the fourth field corresponding to the n-th activated TCI state is used to indicate the identifier information of the UL TCI state and/or the DL TCI state in the n-th activated TCI state.

That is to say, for joint TCI states, the second information can indicate one TCI state ID; for separate TCI states, the second information can indicate a pair of uplink and downlink TCI state IDs.

In one example, when the TCI states configured or activated by the network device are joint TCI states, the content included in the second information can be referred to in Table 5. Specifically, the second information can carry the IDs of N joint TCI states.

**Table 5**

| 1st joint TCI state | 2nd joint TCI state | ... | N-th joint TCI state |
|---|---|---|---|
| Joint TCI state ID = 1 | Joint TCI state ID = 2 | ... | Joint TCI state ID = N |

In another example, when the TCI states configured or activated by the network device are separate TCI states, the content included in the second information can be referred to in Table 6. Specifically, the second information can carry the IDs of N pairs of TCI states.

**Table 6**

| 1st DL TCI State | 1st UL TCI State | ... | N-th DL TCI State | N-th UL TCI State |
|---|---|---|---|---|
| DL TCI state ID = 1 | UL TCI state ID = 1 | ... | DL TCI state ID = N | UL TCI state ID = N |

In yet another example, when the network device simultaneously configures or activates separate TCI states and joint TCI states, the content included in the second information can be referred to in Table 7. Specifically, the first TCI state is a separate TCI state, and the second information can indicate a pair of uplink and downlink TCI state IDs; the N-th TCI state is a joint TCI state, and the second information can indicate a joint TCI state ID.

**Table 7**

| 1st DL TCI State | 1st UL TCI State | ... | N-th joint TCI State |
|---|---|---|---|
| DL TCI state ID = 1 | UL TCI state ID = 1 | ... | joint TCI state ID = N |

It should be noted that in the embodiments of the present disclosure, the second information is different from the second information in the above embodiment that indicates multiple TCI states based on codepoints. The second information in the embodiments of the present disclosure activates N TCI states for subsequent bitmap selection; therefore, the concept of codepoints is not needed in this second information.

It should also be noted that TCI states can be associated with network nodes. However, there is not a strict one-to-one correspondence between one network node and one joint TCI state or one pair of separate TCI states. In one example, when a network node is equipped with multiple antenna panels, the network device may correspond to multiple joint TCI states or multiple pairs of separate TCI states. In another example, when a network node is configured with only one antenna panel, it can provide multiple "beams" (characterized by spatial filters) for the terminal devices it serves. However, considering radio frequency hardware limitations, at the same time (e.g., OFDM symbol), only one or one pair of TCI states can be used.

In the embodiments of the present disclosure, on the basis that the second information activates N TCI states, the first information may carry a first bitmap, and the first bitmap is used to indicate part of the N activated TCI states.

It is understandable that the first information can indicate, in a Bitmap manner, whether the TCI states activated in the second information are applicable, i.e., are the indicated TCI state(s).

In one possible implementation, the first bitmap may include N bits. Among them, the n-th bit may correspond to the n-th joint TCI state or the n-th pair of separate TCI states, and the second information indicates, through the n-th bit, whether the n-th joint TCI state or the n-th pair of separate TCI states are the TCI state(s) indicated by the first information. For example, if the n-th bit is set to a first value (e.g., 1), it indicates that the n-th joint TCI state or the n-th pair of separate TCI states are the indicated TCI state(s). In this way, the terminal device can determine the spatial relationship information or QCL relationship of the network node associated with the n-th joint TCI state or the n-th pair of separate TCI states. If the n-th bit is set to a second value (e.g., 0), it indicates that the n-th joint TCI state or the n-th pair of separate TCI states are not the indicated TCI state(s). That is to say, the n-th joint TCI state or the n-th pair of separate TCI states do not provide communication services for the terminal device.

In another possible implementation, the first bitmap may include (N1+N2*2) bits, where N1 is the number of joint TCI states among the N activated TCI states, and N2 is the number of separate TCI states among the N activated TCI states, where N=N1+N2. It is understandable that since a separate TCI state corresponds to a pair of uplink and downlink TCI states, two bits can be used to indicate the DL TCI state and UL TCI state respectively. For example, suppose the second information activates a first TCI state, a second TCI state, a third TCI state, and a fourth TCI state, wherein the first TCI state and the third TCI state are joint TCI state IDs, and the second TCI state and the fourth TCI state are separate TCI states. The first information may carry a 6-bit length bitmap, such as {101010}. This bitmap may indicate that the NW has selected or indicated the first TCI state, the UL TCI state in the second TCI state, and the DL TCI state in the fourth TCI state.

In some embodiments, the field carrying the first bitmap in the first information may be called a "TCI state selection" field.

It should be noted that in this embodiment, the second information may be carried by MAC CE signaling, and the first information may be carried by DCI signaling. Alternatively, the second information may be carried by RRC signaling, and the first information may be carried by DCI signaling. That is to say, RRC signaling can directly configure N TCI states, while DCI can dynamically indicate at least part of the N TCI states.

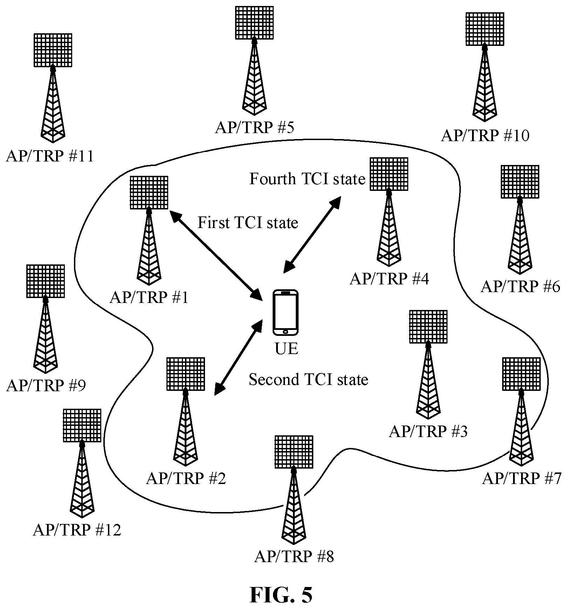

For example, referring to the schematic diagram of a TCI state selection mechanism based on bitmap shown in FIG. 5, the APs/TRPs providing communication services for the terminal device include AP/TRP #1, AP/TRP #2, AP/TRP #3, and AP/TRP #4. In FIG. 5, AP/TRP #1, AP/TRP #2, AP/TRP #3, and AP/TRP #4 correspond to the first TCI state, second TCI state, third TCI state, and fourth TCI state respectively. Assuming that the first TCI state, second TCI state, third TCI state, and fourth TCI state activated in sequence by the MAC CE signaling are joint TCI state ID 1, {DL TCI state ID 3, UL TCI state ID 4}, joint TCI state ID 5, and {DL TCI state ID 7, UL TCI state ID 8} respectively, then the TCI state selection field in the DCI can be a 4-bit long bitmap, such as {1101}. This bitmap indicates that the NW has selected or indicated the first TCI state, the second TCI state, and the fourth TCI state, but has not indicated or selected the third TCI state to provide communication services for the terminal device.

It can be seen that in the communication method provided by the embodiments of the present disclosure, the network device can indicate multiple TCI states to the terminal device based on a bitmap. The operation method has low complexity and is suitable for scenarios with a large number of network nodes.

In an embodiment of the present disclosure, the terminal device may determine the TCI state indicated by the first information by combining the first information and third information. Specifically, on the basis of S110, the communication method provided by the embodiment of the present disclosure may further include the following steps:

The network device sends third information; correspondingly, the terminal device receives the third information, the third information indicating multiple TCI state resource pools; the multiple TCI states are from the multiple TCI state resource pools;
Herein, the first information indicates an index value of each TCI state among the multiple TCI states in its corresponding TCI state resource pool.

It is understandable that the network device can indicate TCI states to the terminal device in two stages. In the first stage, the network device can indicate multiple TCI state resource pools through the third information. Each TCI state resource pool may include one or more TCI states.

It should be noted that the TCI states in each TCI state resource pool may be joint TCI states or separate TCI states. That is, each TCI state resource pool is a mixed TCI state resource pool. In other words, a TCI state resource pool may be mixed with joint TCI states and separate TCI states, or a TCI state resource pool may be all joint TCI states or all separate TCI states.

In the second stage, on the basis of the multiple TCI state resource pools indicated by the third information, the network device can indicate one or more TCI states in each TCI state resource pool through the first information. Specifically, the first information may carry an index value of a TCI state in its corresponding TCI state resource pool. That is to say, the selection range for each TCI state indicated by the first information is the TCI state resource pool indicated in the first stage.

In some embodiments, each TCI state resource pool among the multiple TCI state resource pools has an associated network node. That is to say, in the first stage, the network device indicating TCI state resource pools through the third information can be understood as the network device indicating selection information of multiple network nodes providing communication services for the terminal device through the third information.

It should be noted that the determination method for the multiple network nodes (or multiple TCI state resource pools) may be that the terminal device selects and recommends them to the network device, or the network device determines them by itself and configures them for the terminal device, which is not limited in the embodiments of the present disclosure.

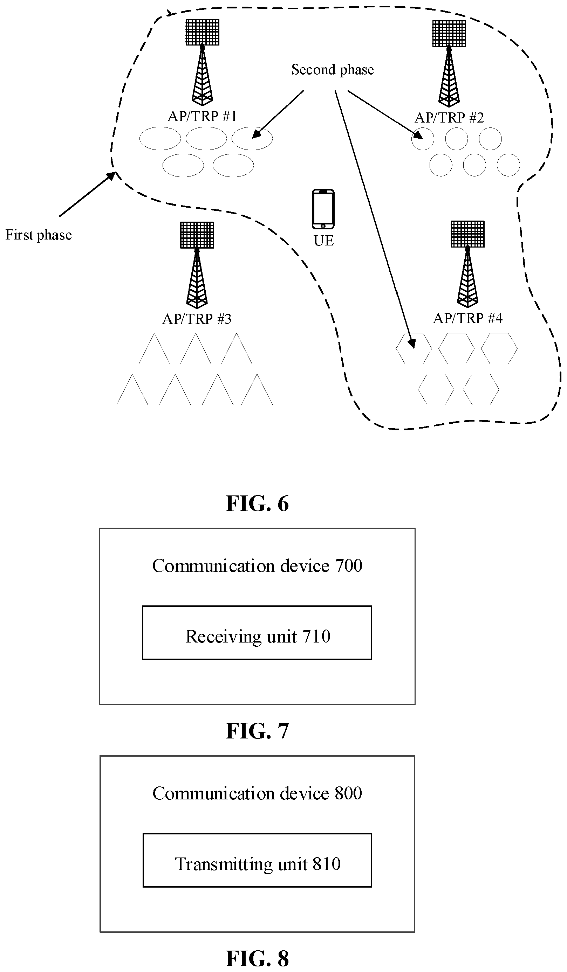

For example, referring to the schematic diagram of the two-stage TCI state selection mechanism shown in FIG. 6. Assuming the number of APs/TRPs providing communication services for the terminal device is N=4, in the first stage, the network device indicates AP/TRP#1, AP/TRP#2, and AP/TRP#4 among these 4 APs/TRPs through the third information. In the second stage, the network device indicates TCI states from the TCI state resource pools corresponding to AP/TRP#1, AP/TRP#2, and AP/TRP#4 respectively through the first information. For example, the first information may indicate Joint TCI state #1 in TCI state resource pool 1 corresponding to AP/TRP#1, indicate {UL TCI state #2, DL TCI state #3} in TCI state resource pool 2 corresponding to AP/TRP#2, and indicate Joint TCI state #5 in TCI state resource pool 4 corresponding to AP/TRP#4.

It should be noted that in the embodiments of the present disclosure, the first information and the third information may be carried by the same DCI or by different DCIs.

The first information and the third information may be in the same DCI, wherein the third information may be in the front part of the DCI and the first information may be in the rear part of the DCI, i.e., the second stage indication information is after the first stage indication information. Additionally, the first information and the second information may be in different DCIs, and the DCI carrying the third information appears before the DCI carrying the first information in the time domain.

It should also be noted that the network device can pre-configure TCI state resource pools through RRC signaling.

In an embodiment of the present disclosure, the first information includes a fifth field and a sixth field, wherein the fifth field is used to activate N TCI states, and the sixth field is used to indicate at least part of the N TCI states.

It is understandable that the network device can use the first information to activate N TCI states while indicating whether the activated TCI states are the TCI states to be used.

It should be noted that the first information may include N fifth fields, respectively indicating the IDs of N TCI states.

Specifically, in a case where the TCI state activated by the n-th fifth field is a joint TCI state, the fifth field is used to indicate the identifier information of the joint TCI state; in a case where the TCI state activated by the n-th fifth field is a separate TCI state, the fifth field is used to indicate the identifier information of the UL TCI state and/or the DL TCI state.

Additionally, the first information may include N sixth fields, which correspond one-to-one with the N fifth fields respectively. Among them, a sixth field is set before each fifth field, and the sixth field indicates whether the TCI state activated by the current fifth field is the indicated TCI state. For example, when the sixth field takes a first value (e.g., 1), it indicates that the TCI state activated by the immediately following fifth field is the indicated TCI state; when the sixth field takes a second value (e.g., 2), it indicates that the TCI state activated by the immediately following fifth field is not the indicated TCI state.

It should be noted that in this embodiment, the first information may be carried by a MAC CE.

That is to say, the network device can directly perform TCI state indication using MAC CE signaling. There is no need to use a bitmap in DCI to select from the TCI states activated by the MAC CE, which can reduce signaling overhead.

In an embodiment of the present disclosure, the first information is carried by RRC signaling.

It is understandable that the first information can also be directly carried by RRC signaling. That is to say, RRC signaling can directly indicate the associated TCI states of multiple network nodes for the terminal device.

Among them, the number of TCI states required for the multiple network nodes serving the terminal device is N or N pairs. The network device can configure a TCI state resource pool with a quantity of N through RRC signaling, without subsequent MAC CE activation and DCI indication. The advantage of doing so is that it can omit low-layer signaling overhead and delay, at the cost of flexibility. When the terminal device needs to move, the previously applicable N or N pairs of TCI states can be updated through RRC reconfiguration.

In summary, through the communication method provided by the embodiments of the present disclosure, a network device can indicate multiple TCI states to a terminal device. In this way, the terminal device can obtain spatial information or QCL information of network nodes associated with each TCI state indicated by the first information according to the TCI state. The spatial relationship or QCL information of multiple network nodes is clarified, ensuring normal communication.

The communication method provided by the present disclosure is described in detail below in conjunction with specific application scenarios.

In the embodiments of the present disclosure, to perform uplink and downlink transmission, the NW needs to indicate multiple pieces of spatial relationship information or QCL information to the UE, so that the UE can obtain time domain, frequency domain, and spatial domain information of multiple APs/TRPs through this indication. This information may be indicated based on protocol stack layers, such as completing the indication through signaling from the RRC layer to the MAC layer and then to the physical layer. For specific indication signaling, it may be based on codepoints, based on bitmap, or based on a two-stage indication method.

It should be noted that in the embodiments of the present disclosure, the NW can pre-configure at least one TCI state resource pool for the UE through RRC signaling. Each TCI state resource pool contains multiple TCI states. The TCI state can be a joint TCI state or a separate uplink and downlink TCI state. That is to say, the TCI state resource pool mixes joint and/or separate TCI states.

The following is elaborated in three embodiments.

### First embodiment

In this embodiment, the network device can indicate multiple TCI states based on codepoints.

Assume the number of APs/TRPs providing communication services for the UE is N. These services include downlink transmission to the UE and/or receiving uplink transmission from the UE. It should be noted that N is dynamically selected through an AP/TRP selection algorithm. For example, the UE can measure the downlink reference signal strength of multiple APs/TRPs and then select the top N APs/TRPs with the highest RSRP to serve it.

In this embodiment, the TCI states configured and activated by the NW can be joint TCI states and/or separate TCI states. Among them, configuring different types of TCI states to the same UE by the NW allows for more flexible deployment on the NW side. For scenarios with beam symmetry, the same QCL indication can be used for uplink and downlink; for scenarios where uplink and downlink APs/TRPs are decoupled (i.e., the uplink and downlink AP/TRP sets/clusters serving the UE are different), different TCI state(s) can be used to indicate different uplink and downlink QCL information (corresponding to different AP/TRP sets/clusters). From the UE side perspective, it can also save unnecessary measurement overhead for the UE.

In one implementation, when RRC configures joint TCI states. The MAC CE can activate TCI codepoints. Specifically, the MAC CE can indicate that a TCI codepoint corresponds to joint TCI states. One TCI codepoint indicates the full set or a subset of N joint TCI states.

For example, referring to Table 2, codepoint "000" may indicate the full set of N joint TCI states, i.e., codepoint "000" may indicate the first joint TCI state to the N-th joint TCI state. Codepoint "001" may indicate only the first joint TCI state. Codepoint "111" may indicate the first joint TCI state and the N-th joint TCI state.

Similar to the Pᵢ field in the MAC CE in FIG. 2, a P_{m, n} field is used in the newly designed MAC CE. The P_{m, n} field can indicate whether the n-th joint TCI state exists in the m-th codepoint. For example, if P_{m, n} is 0, it indicates that the n-th joint TCI state does not exist in the m-th codepoint; if P_{m, n} is 1, it indicates that the n-th joint TCI state exists in the m-th codepoint.

For more codepoints, such as 16 or 32 codepoints represented by 4 bits or 5 bits, they can serve more APs/TRPs, such as 4 or 8 APs/TRPs.

In another implementation, when RRC configures separate TCI states, the correspondence between TCI codepoints and separate TCI states in Table 3 can be referred to. Specifically, one TCI codepoint can indicate up to N pairs of uplink and downlink TCI states.

Similarly, similar to the Pᵢ field in the MAC CE structure in FIG. 2, P_{m,D,n} and P_{m,U,n} are used in the newly designed MAC CE signaling to indicate whether the n-th DL TCI state or UL TCI state exists in the m-th codepoint. For example, if P_{m,D,n} is 0, it indicates that the n-th DL TCI state does not exist in the m-th codepoint; if P_{m,D,n} is 1, it indicates that the n-th DL TCI state exists in the m-th codepoint.

In yet another implementation, separate TCI states and joint TCI states can be configured together by RRC and can also be simultaneously activated/deactivated by one MAC CE. Referring to the correspondence between TCI codepoints and TCI states in Table 4, the first TCI state is a separate TCI state, and the N-th TCI state is a joint TCI state.

For separate TCI states, P_{m,D,n} and P_{m,U,n} can be used to indicate whether the n-th DL TCI state or UL TCI state exists in the m-th codepoint. For joint TCI states, P_{m, n} can be used to indicate whether the m-th codepoint corresponds to the n-th joint TCI state.

It is understandable that indicating TCI states via codepoints is compatible with current protocols. However, the number of codepoints cannot satisfy scenarios with a large number of TRPs/APs.

### Second embodiment

In this embodiment, the network device can indicate multiple TCI states based on a Bitmap.

The MAC CE activates joint and/or separate TCI states corresponding to a cluster/set of APs/TRPs. In principle, each joint TCI state corresponds to one AP/TRP; each pair of separate uplink and downlink TCI states corresponds to one AP/TRP. Under pre-configured or determined conditions, for the AP/TRP set or cluster serving the UE, the MAC CE activates/deactivates a set of TCI states.

It should be noted that the MAC CE for activating/deactivating TCI states in this embodiment is different from the MAC CE in the first embodiment (multiple codepoints). This MAC CE activates/deactivates TCI states corresponding to a set/cluster of APs/TRPs. For subsequent bitmap selection, the concept of codepoints is not needed in this MAC CE.

It should also be noted that there is not a strict one-to-one correspondence between one AP/TRP and one joint TCI state or one pair of separate uplink and downlink TCI states. Example one: When an AP/TRP is equipped with multiple antenna panels, it may correspond to multiple joint TCI states or multiple pairs of separate uplink and downlink TCI states. Example two: When an AP/TRP is configured with one antenna panel, it can have multiple "beams" (the protocol often uses spatial filters instead of "beams" in discussions) for the UEs it serves. However, due to RF hardware limitations, only one or one pair of TCI states can be used at the same time (OFDM symbol).

Referring to Tables 5 to 7, schematic diagrams of activation/deactivation MAC CEs for joint TCI states, separate TCI states, and mixed TCI states are shown respectively, corresponding to N activated joint TCI states, N activated pairs of separate TCI states, and mixed N and/or N pairs of TCI states.

On this basis, a new bitmap-based field can be introduced in DCI. The function of this field is to indicate, in a bitmap manner, whether the TCI states activated in the MAC CE are applicable, i.e., are the indicated TCI state(s).

For example, referring to FIG. 5, the APs/TRPs providing communication services for the terminal device include AP/TRP #1, AP/TRP #2, AP/TRP #3, and AP/TRP #4. In FIG. 5, AP/TRP #1, AP/TRP #2, AP/TRP #3, and AP/TRP #4 correspond to the first TCI state, second TCI state, third TCI state, and fourth TCI state respectively. Assuming that the first TCI state, second TCI state, third TCI state, and fourth TCI state activated in sequence by the MAC CE signaling are joint TCI state ID 1, {DL TCI state ID 3, UL TCI state ID 4}, joint TCI state ID 5, and {DL TCI state ID 7, UL TCI state ID 8} respectively, then the TCI state selection field in the DCI can be a 4-bit long bitmap, such as {1101}. This bitmap indicates that the NW has selected or indicated the first TCI state, the second TCI state, and the fourth TCI state, but has not indicated or selected the third TCI state to provide communication services for the terminal device.

In some embodiments, in addition to the above-described indication of multiple TCI states based on bitmap, the NW can directly perform TCI state indication using a MAC CE. That is to say, the NW does not need to use a bitmap in DCI to select from the TCI states activated by the MAC CE. Specifically, the MAC CE can indicate which ones from the first (pair) to the N-th (pair) TCI states are the indicated TCI state(s), i.e., applicable.

For example, the NW can add an Iₙ field at the header of the MAC CE, where 1≤n≤N. When Iₙ=0, it indicates that the n-th or n-th pair of TCI state(s) is/are not the indicated TCI state(s), and therefore will not appear in this MAC CE; conversely, when Iₙ=1, it indicates that the n-th or n-th pair of TCI state(s) is/are the indicated TCI state(s), the MAC CE indicates them, gives the TCI state ID(s), and they will appear in this MAC CE.

In some embodiments, besides the above-described scheme where the MAC CE directly indicates TCI states for an AP/TRP cluster/set, another protocol-level possibility is that the NW uses RRC signaling to directly perform TCI state indication. Assuming the number of TCI states required for the AP/TRP set/cluster serving the UE is N or N pairs, then the NW configures a TCI state resource pool with a quantity of N. The UE directly uses the TCI states configured by RRC, without subsequent MAC CE activation and DCI indication. The advantage of doing so is that it can omit low-layer signaling overhead and delay, at the cost of flexibility. When the UE needs to move, the previously applicable N or N pairs of TCI states need to be updated through RRC reconfiguration.

### Third embodiment

In this embodiment, the network device can indicate multiple TCI states based on two-stage information.

Different from the schemes based on MAC CE activation/deactivation of TCI states in the above two embodiments, the two-stage information indication scheme for TCI states in this embodiment can be based solely on RRC-configured TCI state resource pools. Assume RRC configures a larger TCI state resource pool containing multiple TCI states associated with AP/TRP sets/clusters. It should be noted that this resource pool can be mixed with joint TCI states and separate uplink and downlink TCI states, or can be all joint TCI states or all separate uplink and downlink TCI states.

Specifically, DCI can indicate TCI states configured by RRC signaling in two stages. First stage information (1st stage): A new field is created in DCI, for example, named AP/TRP selection field. The NW uses it to indicate selection information for the AP/TRP set/cluster serving the UE. The determination method for this AP/TRP set/cluster can be as follows: First, selected by the UE and recommended to the NW; Second, decided by the NW side and configured to the UE.

Second stage information (2nd stage): Based on the APs/TRPs selected in the first stage, another TCI state selection field (new TCI state selection field) in the DCI indicates the TCI states corresponding to the indicated APs/TRPs. This TCI state selection field is different from the field of the same name in the previous embodiment because its selection range is the TCI states associated with the APs/TRPs indicated in the first stage.

For example, referring to FIG. 6, assuming the number of APs/TRPs in the set/cluster serving the UE is N=4, the first stage information indicates the selection of AP/TRP#1, AP/TRP#2, and AP/TRP#4 from these 4 APs/TRPs. In the second stage indication information, corresponding TCI states are indicated for the selected APs/TRPs. For example, the second stage indication information indicates Joint TCI state #1, {UL TCI state #2, DL TCI state #3}, and Joint TCI state #5.

Additionally, it should be noted that the first stage information and the second stage information can be in the same DCI, with the first stage information appearing in the front part of the DCI and the second stage information appearing in the rear part of the DCI, i.e., after the first stage information. Alternatively, the first stage information and the second stage information can be in different DCIs, and the DCI containing the first stage information appears before the DCI containing the second stage information in the time domain.

In summary, through the communication method provided by the embodiments of the present disclosure, a network device can indicate multiple TCI states to a terminal device. In this way, the terminal device can obtain spatial information or QCL information of network nodes associated with each TCI state indicated by the first information according to the TCI state. The spatial relationship or QCL information of multiple network nodes is clarified, ensuring normal communication.

The preferred embodiments of the present disclosure have been described in detail above with reference to the accompanying drawings. However, the present disclosure is not limited to the specific details in the above embodiments. Within the technical concept of the present disclosure, various simple modifications can be made to the technical solutions of the present disclosure, and these simple modifications all belong to the protection scope of the present disclosure. For example, the various specific technical features described in the above specific embodiments can be combined in any suitable manner without contradiction. To avoid unnecessary repetition, the present disclosure does not further describe various possible combination methods. For another example, various different embodiments of the present disclosure can also be combined arbitrarily, as long as they do not violate the idea of the present disclosure, and they should also be considered as the content disclosed in the present disclosure. For yet another example, on the premise of no conflict, the various embodiments described in the present disclosure and/or the technical features in the various embodiments can be arbitrarily combined with existing technologies, and the technical solutions obtained after combination should also fall within the protection scope of the present disclosure.

It should also be understood that in the various method embodiments of the present disclosure, the size of the sequence numbers of the above processes does not imply the order of execution. The execution order of each process should be determined by its function and internal logic, and should not constitute any limitation on the implementation process of the embodiments of the present disclosure. In addition, in the embodiments of the present disclosure, the terms "downlink", "uplink", and "sidelink" are used to indicate the transmission direction of signals or data. Among them, "downlink" is used to indicate that the transmission direction of signals or data is a first direction from a site to a user equipment of a cell; "uplink" is used to indicate that the transmission direction of signals or data is a second direction from a user equipment of a cell to a site; "sidelink" is used to indicate that the transmission direction of signals or data is a third direction from user equipment 1 to user equipment 2. For example, "downlink signal" indicates that the transmission direction of the signal is the first direction. In addition, in the embodiments of the present disclosure, the term "and/or" is only a description of an associative relationship between associated objects, indicating that three relationships may exist. Specifically, A and/or B may indicate: A exists alone, both A and B exist, or B exists alone. In addition, the character "/" herein generally indicates that the associated objects are in an "or" relationship.

FIG. 7 is a first schematic structural diagram of a communication apparatus according to an embodiment of the present disclosure, applied to a terminal device. As shown in FIG. 7, the communication apparatus includes:
a receiving unit 710, configured to receive first information, the first information indicating multiple TCI states, wherein network nodes associated with each TCI state among the multiple TCI states jointly provide communication services for the terminal device.

In some embodiments, the multiple TCI states include joint TCI state and/or separate TCI state.

In some embodiments, the receiving unit 710 is further configured to receive second information, the second information being used to activate N TCI states, the multiple TCI states being at least part of the N activated TCI states, and N being an integer greater than or equal to 2.

In some embodiments, the second information indicates multiple TCI states corresponding to each codepoint among multiple codepoints; the multiple TCI states corresponding to each codepoint are at least part of the N activated TCI states;
Herein, the first information carries a target codepoint, the target codepoint being any one of the multiple codepoints; the multiple TCI states indicated by the first information are the multiple TCI states corresponding to the target codepoint.

In some embodiments, the second information includes M*N first fields P; M is the number of the multiple codepoints;
Herein, a first field P_{m, n} is used to indicate whether the m-th codepoint corresponds to the n-th TCI state; m is an integer greater than or equal to 1 and less than or equal to M, n is an integer greater than or equal to 1 and less than or equal to N.

In some embodiments, in a case where the n-th TCI state is a joint TCI state, a first field P_{m, n} is used to indicate whether the m-th codepoint corresponds to the n-th joint TCI state;
In a case where the n-th TCI state is a separate TCI state, a first field P_{m, n} includes a downlink subfield P_{m,D,n} and an uplink subfield P_{m,U,n}; wherein, the downlink subfield P_{m,D,n} is used to indicate whether the m-th codepoint corresponds to the n-th downlink TCI state; the uplink subfield P_{m,U,n} is used to indicate whether the m-th codepoint corresponds to the n-th uplink TCI state.

In some embodiments, the second information further includes a second field, the second field being used to indicate whether each TCI state among the N activated TCI states is a separate TCI state or a joint TCI state.

In some embodiments, the second information further includes a third field, the third field being used to indicate identifier information of the multiple TCI states corresponding to each TCI codepoint.

In some embodiments, the second information indicates identifier information of each TCI state among the N activated TCI states;
The first information carries a first bitmap, the first bitmap being used to indicate part of the N activated TCI states.

In some embodiments, the second information includes N fourth fields, the N fourth fields respectively corresponding to the N activated TCI states;
Herein, in a case where the n-th activated TCI state is a joint TCI state, the fourth field corresponding to the n-th activated TCI state is used to indicate the identifier information of the n-th activated TCI state;
In a case where the n-th activated TCI state is a separate TCI state, the fourth field corresponding to the n-th activated TCI state is used to indicate identifier information of an uplink TCI state and/or a downlink TCI state in the n-th activated TCI state.

In some embodiments, the first information is carried by downlink control information;
The second information is carried by a Medium Access Control Control Element (MAC CE) or Radio Resource Control (RRC) signaling.

In some embodiments, the receiving unit 710 is further configured to receive third information, the third information indicating multiple TCI state resource pools; the multiple TCI states are from the multiple TCI state resource pools;
The first information indicates an index value of each TCI state among the multiple TCI states in its corresponding TCI state resource pool.

In some embodiments, each TCI state resource pool among the multiple TCI state resource pools has an associated network node.

In some embodiments, the first information and the third information are carried by the same downlink control information or by different downlink control information.

In some embodiments, the first information includes a fifth field and a sixth field, the fifth field being used to activate N TCI states, and the sixth field being used to indicate at least part of the N TCI states.

In some embodiments, the first information is carried by a MAC CE.

In some embodiments, the first information is carried by RRC signaling.

FIG. 8 is a second schematic structural diagram of a communication apparatus according to an embodiment of the present disclosure, applied to a network device. As shown in FIG. 8, the communication apparatus includes:
A sending unit 810, configured to send first information to a terminal device, the first information indicating multiple TCI states, wherein network nodes associated with each TCI state among the multiple TCI states jointly provide communication services for the terminal device.

In some embodiments, the multiple TCI states include joint TCI state and/or separate TCI state.

In some embodiments, the sending unit 810 is further configured to send second information to the terminal device, the second information being used to activate N TCI states, the multiple TCI states being at least part of the N activated TCI states, and N being an integer greater than or equal to 2.

In some embodiments, the second information indicates multiple TCI states corresponding to each codepoint among multiple codepoints; the multiple TCI states corresponding to each codepoint are at least part of the N activated TCI states;
Herein, the first information carries a target codepoint, the target codepoint being any one of the multiple codepoints; the multiple TCI states indicated by the first information are the multiple TCI states corresponding to the target codepoint.

In some embodiments, the second information includes M*N first fields P; M is the number of the multiple codepoints;
Herein, a first field P_{m, n} is used to indicate whether the m-th codepoint corresponds to the n-th TCI state; m is an integer greater than or equal to 1 and less than or equal to M, n is an integer greater than or equal to 1 and less than or equal to N.

In some embodiments, in a case where the n-th TCI state is a joint TCI state, a first field P_{m, n} is used to indicate whether the m-th codepoint corresponds to the n-th joint TCI state;
In a case where the n-th TCI state is a separate TCI state, a first field P_{m, n} includes a downlink subfield P_{m,D,n} and an uplink subfield P_{m,U,n}; wherein, the downlink subfield P_{m,D,n} is used to indicate whether the m-th codepoint corresponds to the n-th downlink TCI state; the uplink subfield P_{m,U,n} is used to indicate whether the m-th codepoint corresponds to the n-th uplink TCI state.

In some embodiments, the second information further includes a second field, the second field being used to indicate whether each TCI state among the N activated TCI states is a separate TCI state or a joint TCI state.

In some embodiments, the second information further includes a third field, the third field being used to indicate identifier information of the multiple TCI states corresponding to each TCI codepoint.

In some embodiments, the second information indicates identifier information of each TCI state among the N activated TCI states;
The first information carries a first bitmap, the first bitmap being used to indicate part of the N activated TCI states.

In some embodiments, the second information includes N fourth fields, the N fourth fields respectively corresponding to the N activated TCI states;
Herein, in a case where the n-th activated TCI state is a joint TCI state, the fourth field corresponding to the n-th activated TCI state is used to indicate the identifier information of the n-th activated TCI state;

In a case where the n-th activated TCI state is a separate TCI state, the fourth field corresponding to the n-th activated TCI state is used to indicate identifier information of an uplink TCI state and/or a downlink TCI state in the n-th activated TCI state.

In some embodiments, the first information is carried by downlink control information;
The second information is carried by a Medium Access Control Control Element (MAC CE) or Radio Resource Control (RRC) signaling.

In some embodiments, the sending unit 810 is further configured to send third information to the terminal device, the third information indicating multiple TCI state resource pools; the multiple TCI states are from the multiple TCI state resource pools;
The first information indicates an index value of each TCI state among the multiple TCI states in its corresponding TCI state resource pool.

In some embodiments, each TCI state resource pool among the multiple TCI state resource pools has an associated network node.

In some embodiments, the first information and the third information are carried by the same downlink control information or by different downlink control information.

In some embodiments, the first information includes a fifth field and a sixth field, the fifth field being used to activate N TCI states, and the sixth field being used to indicate at least part of the N TCI states.

In some embodiments, the first information is carried by a MAC CE.

In some embodiments, the first information is carried by RRC signaling.

Persons skilled in the art should understand that the related description of the above communication apparatus in the embodiments of the present disclosure can be understood with reference to the related description of the communication method in the embodiments of the present disclosure.

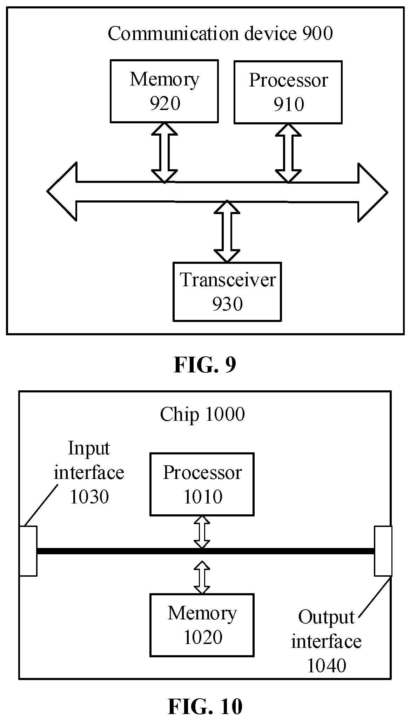

FIG. 9 is a schematic structural diagram of a communication device 900 provided by an embodiment of the present disclosure. The communication device can be a terminal device or a network device. The communication device 900 shown in FIG. 9 includes a processor 910, and the processor 910 can invoke and run a computer program from a memory to implement the method in the embodiments of the present disclosure.

Optionally, as shown in FIG. 9, the communication device 900 may further include a memory 920. The processor 910 can invoke and run a computer program from the memory 920 to implement the method in the embodiments of the present disclosure.

The memory 920 may be a separate device independent of the processor 910 or may be integrated in the processor 910.

Optionally, as shown in FIG. 9, the communication device 900 may further include a transceiver 930, and the processor 910 can control the transceiver 930 to communicate with other devices. Specifically, it can send information or data to other devices or receive information or data sent by other devices.

The transceiver 930 may include a transmitter and a receiver. The transceiver 930 may further include antennas, and the number of antennas may be one or more.

Optionally, the communication device 900 may specifically be the network device in the embodiments of the present disclosure, and the communication device 900 may implement the corresponding processes implemented by the network device in the various methods of the embodiments of the present disclosure. For brevity, details are not repeated here.

Optionally, the communication device 900 may specifically be the mobile terminal/terminal device in the embodiments of the present disclosure, and the communication device 900 may implement the corresponding processes implemented by the mobile terminal/terminal device in the various methods of the embodiments of the present disclosure. For brevity, details are not repeated here.

FIG. 10 is a schematic structural diagram of a chip according to an embodiment of the present disclosure. The chip 1000 shown in FIG. 10 includes a processor 1010, and the processor 1010 can invoke and run a computer program from a memory to implement the method in the embodiments of the present disclosure.

Optionally, as shown in FIG. 10, the chip 1000 may further include a memory 1020. The processor 1010 can invoke and run a computer program from the memory 1020 to implement the method in the embodiments of the present disclosure.

The memory 1020 may be a separate device independent of the processor 1010 or may be integrated in the processor 1010.

Optionally, the chip 1000 may further include an input interface 1030. The processor 1010 may control the input interface 1030 to communicate with other devices or chips. Specifically, it may obtain information or data sent by other devices or chips.

Optionally, the chip 1000 may further include an output interface 1040. The processor 1010 may control the output interface 1040 to communicate with other devices or chips. Specifically, it may output information or data to other devices or chips.

Optionally, the chip can be applied to the network device in the embodiments of the present disclosure, and the chip can implement the corresponding processes implemented by the network device in the various methods of the embodiments of the present disclosure. For brevity, details are not repeated here.

Optionally, the chip can be applied to the mobile terminal/terminal device in the embodiments of the present disclosure, and the chip can implement the corresponding processes implemented by the mobile terminal/terminal device in the various methods of the embodiments of the present disclosure. For brevity, details are not repeated here.

It should be understood that the chip mentioned in the embodiments of the present disclosure may also be referred to as a system-level chip, a system-on-chip, a chip system, or a system-on-a-chip, etc.

Embodiments of the present disclosure also provide a computer storage medium storing one or more programs. The one or more programs can be executed by one or more processors to implement the method in the embodiments of the present disclosure.

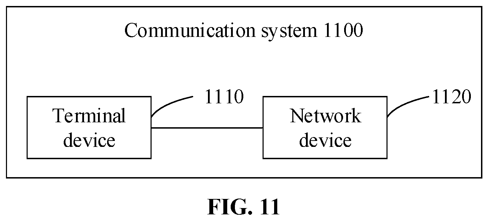

FIG. 11 is a schematic block diagram of a communication system 1100 provided by an embodiment of the present disclosure. As shown in FIG. 11, the communication system 1100 includes a terminal device 1110 and a network device 1120.

The terminal device 1110 can be used to implement the corresponding functions implemented by the terminal device in the above method, and the network device 1120 can be used to implement the corresponding functions implemented by the network device in the above method. For brevity, details are not repeated here.

It should be understood that the processor in the embodiments of the present disclosure may be an integrated circuit chip with signal processing capability. In the implementation process, the steps of the above method embodiments can be completed by hardware integrated logic circuits in the processor or instructions in the form of software. The above processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA), or other programmable logic devices, discrete gate or transistor logic devices, discrete hardware components. The methods, steps, and logic block diagrams disclosed in the embodiments of the present disclosure can be implemented or executed. A general-purpose processor may be a microprocessor, or the processor may be any conventional processor, etc. The steps of the methods disclosed in connection with the embodiments of the present disclosure may be directly embodied as being executed and completed by a hardware decoding processor, or by a combination of hardware and software modules in the decoding processor. The software modules may be located in a random access memory, flash memory, read-only memory, programmable read-only memory, electrically erasable programmable memory, registers, and other mature storage media in the art. The storage medium is located in the memory, and the processor reads information in the memory and completes the steps of the above method in combination with its hardware.

It can be understood that the memory in the embodiments of the present disclosure may be a volatile memory or a non-volatile memory, or may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not limitation, many forms of RAM are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDR SDRAM), enhanced synchronous dynamic random access memory (Enhanced SDRAM, ESDRAM), synch link dynamic random access memory (Synchlink DRAM, SLDRAM), and direct rambus random access memory (Direct Rambus RAM, DR RAM). It should be noted that the memories of the systems and methods described herein are intended to include, but are not limited to, these and any other suitable types of memories.

It should be understood that the above description of the memory is exemplary but not limiting. For example, the memory in the embodiments of the present disclosure may also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM), direct rambus random access memory (Direct Rambus RAM, DR RAM), etc. That is to say, the memory in the embodiments of the present disclosure is intended to include, but is not limited to, these and any other suitable types of memory.

The embodiments of the present disclosure also provide a computer-readable storage medium for storing computer programs.

Optionally, the computer-readable storage medium can be applied to the network device in the embodiments of the present disclosure, and the computer program causes a computer to execute the corresponding processes implemented by the network device in the various methods of the embodiments of the present disclosure. For brevity, details are not repeated here.

Optionally, the computer-readable storage medium can be applied to the mobile terminal/terminal device in the embodiments of the present disclosure, and the computer program causes a computer to execute the corresponding processes implemented by the mobile terminal/terminal device in the various methods of the embodiments of the present disclosure. For brevity, details are not repeated here.

The embodiments of the present disclosure also provide a computer program product, including computer program instructions.

Optionally, the computer program product can be applied to the network device in the embodiments of the present disclosure, and the computer program instructions cause a computer to execute the corresponding processes implemented by the network device in the various methods of the embodiments of the present disclosure. For brevity, details are not repeated here.

Optionally, the computer program product can be applied to the mobile terminal/terminal device in the embodiments of the present disclosure, and the computer program instructions cause a computer to execute the corresponding processes implemented by the mobile terminal/terminal device in the various methods of the embodiments of the present disclosure. For brevity, details are not repeated here.

The embodiments of the present disclosure also provide a computer program.

Optionally, the computer program can be applied to the network device in the embodiments of the present disclosure. When the computer program is run on a computer, it causes the computer to execute the corresponding processes implemented by the network device in the various methods of the embodiments of the present disclosure. For brevity, details are not repeated here.

Optionally, the computer program can be applied to the mobile terminal/terminal device in the embodiments of the present disclosure. When the computer program is run on a computer, it causes the computer to execute the corresponding processes implemented by the mobile terminal/terminal device in the various methods of the embodiments of the present disclosure. For brevity, details are not repeated here.

Persons of ordinary skill in the art may realize that the units and algorithm steps of the examples described in combination with the embodiments disclosed herein can be implemented by electronic hardware, or a combination of computer software and electronic hardware. Whether these functions are performed by hardware or software depends on the specific application and design constraints of the technical solution. Professional technicians may use different methods for each specific application to implement the described functions, but such implementation should not be considered beyond the scope of the present disclosure.

Persons skilled in the art can clearly understand that, for the convenience and conciseness of description, the specific working processes of the systems, apparatuses, and units described above can refer to the corresponding processes in the foregoing method embodiments, and are not repeated here.

In the several embodiments provided in the present disclosure, it should be understood that the disclosed systems, apparatuses, and methods may be implemented in other ways. For example, the apparatus embodiments described above are only illustrative. For example, the division of the units is only a logical function division. In actual implementation, there may be other division methods. For example, multiple units or components may be combined or integrated into another system, or some features may be ignored or not performed. In addition, the mutual coupling or direct coupling or communication connection shown or discussed may be indirect coupling or communication connection through some interfaces, apparatuses, or units, and may be electrical, mechanical, or otherwise.

The units described as separate components may or may not be physically separate. The components displayed as units may or may not be physical units; that is, they may be located in one place, or may be distributed to multiple network units. Part or all of the units may be selected according to actual needs to achieve the purpose of the solutions of the embodiments.

In addition, the functional units in the various embodiments of the present disclosure may be integrated into one processing unit, or each unit may exist physically separately, or two or more units may be integrated into one unit.

If the functions are implemented in the form of software functional units and sold or used as independent products, they can be stored in a computer-readable storage medium. Based on this understanding, the technical solution of the present disclosure essentially, or the part contributing to the prior art, or part of the technical solution, may be embodied in the form of a software product. The computer software product is stored in a storage medium and includes several instructions for causing a computer device (which may be a personal computer, a server, or a network device, etc.) to perform all or part of the steps of the methods described in the various embodiments of the present disclosure. The foregoing storage medium includes: U disk, mobile hard disk, read-only memory (Read-Only Memory, ROM), random access memory (Random Access Memory, RAM), magnetic disk, or optical disk, and other media that can store program codes.

The above is only specific implementations of the present disclosure, but the protection scope of the present disclosure is not limited thereto. Any person skilled in the art can easily think of changes or substitutions within the technical scope disclosed in the present disclosure, which should be covered within the protection scope of the present disclosure. Therefore, the protection scope of the present disclosure shall be subject to the protection scope of the claims.

## Claims

1. A communication method, comprising:
receiving, by a terminal device, first information, the first information indicating a plurality of Transmission Configuration Indication (TCI) states, wherein network nodes associated with each TCI state among the plurality of TCI states jointly provide communication services for the terminal device.

2. The method according to claim 1, wherein the plurality of TCI states comprise joint TCI state and/or separate TCI state.

3. The method according to claim 1 or 2, further comprising:
receiving, by the terminal device, second information, the second information being used to activate N TCI states, the plurality of TCI states being at least part of the N activated TCI states, N being an integer greater than or equal to 2.

4. The method according to claim 3, wherein
the second information indicates a plurality of TCI states corresponding to each codepoint among a plurality of codepoints; and the plurality of TCI states corresponding to each codepoint are at least part of the N activated TCI states,
wherein the first information carries a target codepoint, the target codepoint is any one of the plurality of codepoints; and the plurality of TCI states indicated by the first information are the plurality of TCI states corresponding to the target codepoint.

5. The method according to claim 4, wherein the second information comprises M*N first fields P, and M is a number of the plurality of codepoints, and
a first field P_{m, n} is used to indicate whether the m-th codepoint corresponds to the n-th TCI state; m is an integer greater than or equal to 1 and less than or equal to M, n is an integer greater than or equal to 1 and less than or equal to N.

6. The method according to claim 5, wherein
in a case where the n-th TCI state is a joint TCI state, a first field P_{m, n} is used to indicate whether the m-th codepoint corresponds to the n-th joint TCI state; and
in a case where the n-th TCI state is a separate TCI state, a first field P_{m, n} comprises a downlink subfield P_{m,D,n} and an uplink subfield P_{m,U,n}; wherein the downlink subfield P_{m,D,n} is used to indicate whether the m-th codepoint corresponds to the n-th downlink TCI state; the uplink subfield P_{m,U,n} is used to indicate whether the m-th codepoint corresponds to the n-th uplink TCI state.

7. The method according to claim 6, wherein the second information further comprises a second field, and the second field is used to indicate whether each TCI state among the N activated TCI states is a separate TCI state or a joint TCI state.

8. The method according to any one of claims 4 to 7, wherein the second information further comprises a third field, and the third field is used to indicate identifier information of the plurality of TCI states corresponding to each TCI codepoint.

9. The method according to claim 3, wherein
the second information indicates identifier information of each TCI state among the N activated TCI states; and
the first information carries a first bitmap, and the first bitmap is used to indicate part of the N activated TCI states.

10. The method according to claim 9, wherein
the second information comprises N fourth fields, and the N fourth fields respectively correspond to the N activated TCI states,
wherein in a case where the n-th activated TCI state is a joint TCI state, the fourth field corresponding to the n-th activated TCI state is used to indicate the identifier information of the n-th activated TCI state; and
in a case where the n-th activated TCI state is a separate TCI state, the fourth field corresponding to the n-th activated TCI state is used to indicate identifier information of an uplink TCI state and/or a downlink TCI state in the n-th activated TCI state.

11. The method according to any one of claims 3 to 10, wherein the first information is carried by downlink control information; and
the second information is carried by a Medium Access Control Control Element (MAC CE) or Radio Resource Control (RRC) signaling.

12. The method according to claim 1 or 2, further comprising:
receiving, by the terminal device, third information, the third information indicating a plurality of TCI state resource pools, wherein the plurality of TCI states are from the plurality of TCI state resource pools, and
the first information indicates an index value of each TCI state among the plurality of TCI states in corresponding TCI state resource pool.

13. The method according to claim 12, wherein each TCI state resource pool among the plurality of TCI state resource pools has an associated network node.

14. The method according to claim 12 or 13, wherein the first information and the third information are carried by a same downlink control information or by different downlink control information.

15. The method according to claim 1 or 2, wherein
the first information comprises a fifth field and a sixth field, the fifth field is used to activate N TCI states, and the sixth field is used to indicate at least part of the N TCI states.

16. The method according to claim 14, wherein the first information is carried by a Medium Access Control Control Element (MAC CE).

17. The method according to claim 1 or 2, wherein the first information is carried by Radio Resource Control (RRC) signaling.

18. A communication method, comprising:
sending, by a network device, first information to a terminal device, the first information indicating a plurality of Transmission Configuration Indication (TCI) states, wherein network nodes associated with each TCI state among the plurality of TCI states jointly provide communication services for the terminal device.

19. The method according to claim 1, wherein the plurality of TCI states comprise joint TCI state and/or separate TCI state.

20. The method according to claim 18 or 19, further comprising:
sending, by the network device, second information to the terminal device, the second information is used to activate N TCI states, the plurality of TCI states are at least part of the N activated TCI states, and N is an integer greater than or equal to 2.

21. The method according to claim 20, wherein
the second information indicates a plurality of TCI states corresponding to each codepoint among a plurality of codepoints; and the plurality of TCI states corresponding to each codepoint are at least part of the N activated TCI states,
wherein the first information carries a target codepoint, the target codepoint is any one of the plurality of codepoints; and the plurality of TCI states indicated by the first information are the plurality of TCI states corresponding to the target codepoint.

22. The method according to claim 21, wherein the second information comprises M*N first fields P, M is a number of the plurality of codepoints, and
a first field P_{m, n} is used to indicate whether the m-th codepoint corresponds to the n-th TCI state; m is an integer greater than or equal to 1 and less than or equal to M, n is an integer greater than or equal to 1 and less than or equal to N.

23. The method according to claim 22, wherein
in a case where the n-th TCI state is a joint TCI state, a first field P_{m, n} is used to indicate whether the m-th codepoint corresponds to the n-th joint TCI state; and
in a case where the n-th TCI state is a separate TCI state, a first field P_{m, n} comprises a downlink subfield P_{m,D,n} and an uplink subfield P_{m,U,n}; wherein the downlink subfield P_{m,D,n} is used to indicate whether the m-th codepoint corresponds to the n-th downlink TCI state; the uplink subfield P_{m,U,n} is used to indicate whether the m-th codepoint corresponds to the n-th uplink TCI state.

24. The method according to claim 23, wherein the second information further comprises a second field, the second field is used to indicate whether each TCI state among the N activated TCI states is a separate TCI state or a joint TCI state.

25. The method according to any one of claims 21 to 24, wherein the second information further comprises a third field, and the third field is used to indicate identifier information of the plurality of TCI states corresponding to each TCI codepoint.

26. The method according to claim 20, wherein
the second information indicates identifier information of each TCI state among the N activated TCI states; and
the first information carries a first bitmap, and the first bitmap is used to indicate part of the N activated TCI states.

27. The method according to claim 26, wherein
the second information comprises N fourth fields, and the N fourth fields respectively correspond to the N activated TCI states,
wherein in a case where the n-th activated TCI state is a joint TCI state, the fourth field corresponding to the n-th activated TCI state is used to indicate the identifier information of the n-th activated TCI state; and
in a case where the n-th activated TCI state is a separate TCI state, the fourth field corresponding to the n-th activated TCI state is used to indicate identifier information of an uplink TCI state and/or a downlink TCI state in the n-th activated TCI state.

28. The method according to any one of claims 20 to 27, wherein the first information is carried by downlink control information; and
the second information is carried by a Medium Access Control Control Element (MAC CE) or Radio Resource Control (RRC) signaling.

29. The method according to claim 18 or 19, further comprising:
sending, by the network device, third information to the terminal device, the third information indicating a plurality of TCI state resource pools, wherein the plurality of TCI states are from the plurality of TCI state resource pools, and
the first information indicates an index value of each TCI state among the plurality of TCI states in its corresponding TCI state resource pool.

30. The method according to claim 29, wherein each TCI state resource pool among the plurality of TCI state resource pools has an associated network node.

31. The method according to claim 29 or 30, wherein the first information and the third information are carried by a same downlink control information or by different downlink control information.

32. The method according to claim 18 or 19, wherein
the first information comprises a fifth field and a sixth field, the fifth field is used to activate N TCI states, and the sixth field is used to indicate at least part of the N TCI states.

33. The method according to claim 32, wherein the first information is carried by a Medium Access Control Control Element (MAC CE).

34. The method according to claim 18 or 19, wherein the first information is carried by Radio Resource Control (RRC) signaling.

35. A communication apparatus, applied to a terminal device, the communication apparatus comprising:
a receiving unit, configured to receive first information, the first information indicating a plurality of Transmission Configuration Indication (TCI) states, wherein network nodes associated with each TCI state among the plurality of TCI states jointly provide communication services for the terminal device.

36. A communication apparatus, applied to a network device, the communication apparatus comprising:
a sending unit, configured to send first information to a terminal device, the first information indicating a plurality of Transmission Configuration Indication (TCI) states, wherein network nodes associated with each TCI state among the plurality of TCI states jointly provide communication services for the terminal device.

37. A terminal device, comprising: a memory, a processor, and a transceiver, wherein
the transceiver is used to implement communication with a network device;
the memory stores a computer program executable on the processor, and
the processor, in conjunction with the transceiver, when executing the computer program, implements the method according to any one of claims 1 to 17.

38. A network device, comprising: a memory, a processor, and a transceiver, wherein
the transceiver is used to implement communication with a terminal device;
the memory stores a computer program executable on the processor, and
the processor, in conjunction with the transceiver, when executing the computer program, implements the method according to any one of claims 18 to 34.

39. A computer storage medium having stored thereon one or more programs, the one or more programs being executable by one or more processors to implement the method according to any one of claims 1 to 17, or the method according to any one of claims 18 to 34.

40. A chip, comprising: a processor, configured to invoke and run a computer program from a memory, causing a device equipped with the chip to execute the method according to any one of claims 1 to 17, or the method according to any one of claims 18 to 34.

41. A computer program product, the computer program product comprising a computer storage medium, the computer storage medium storing a computer program, the computer program comprising instructions executable by at least one processor, wherein when the instructions are executed by the at least one processor, the method according to any one of claims 1 to 17, or the method according to any one of claims 18 to 34 is implemented.

42. A computer program for causing a computer to execute the method according to any one of claims 1 to 17, or the method according to any one of claims 18 to 34.
